# EUROPEAN PATENT APPLICATION

(11) **EP 2 095 713 A1**
(43) Date of publication of application: **02.09.2009**
(21) Application number: 06849603.3
(22) Date of filing: 20.10.2006
(51) Int. Cl.: A01N 57/22, A01N 35/06, A01P 21/00

(54) **COMPOSITION FOR REGENERATING AND STIMULATING GROWTH OF PLANTS AND FOR ADAPTING PLANTS TO DIFFERENT STRESS FACTORS**

(71) Applicant: Limited Liability Company "Mitotechnology", Moscow 119180 (RU)
(72) Inventor: SKULACHEV, Vladimir Petrovich, Moscow 119234 (RU); SKULACHEV, Maxim Vladimirovich, Moscow 119234 (RU)
(74) Representative: HOFFMANN EITLE
(86) International application number: PCT/RU2006/000547
(87) International publication number: WO 2008/048135

(57) **Abstract**

The invention relates to bioengineering and can be used for stimulating the regeneration of plants from tissue and undifferentiated cells, which are cultivated in simulated conditions. Said invention can be also used in agriculture for accelerating seed germination, increasing the germination of old, time-expired seeds and for raising the resistance of plants to biotic and abiotic stresses.

## Description

### Field of the Invention

The present invention relates to bioengineering and can be used for stimulating the regeneration of plants from tissue and undifferentiated cells, which are cultivated in simulated conditions. Said invention can also be used in agriculture for accelerating seed germination, increasing the germination of old, time-expired seeds and for raising the resistance of plants to biotic and abiotic stresses.

### State of the Art

Regeneration of plants is an indispensable and oft. limiting stage of biotechnologies, such as cell selection, genetic engineering, somatic hybridization, production of haploid and dihaploid plants, microclonal multiplication.

Microclonal multiplication is a method of vegetative multiplication of plants by activating quiescent buds, the induction of formation of new buds (adventive) or callus tissue, with plants produced therefrom later on. This method also provides for the partial sanitation of planting material from fungous, bacterial and viral diseases in addition to multiplication. Today all of the elite planting material of potatoes, berry, vegetable and decorative cultures is obtained with the use of microclonal multiplication. A great interest is shown in the clonal multiplication of trees [Ahuja, M.R. and W.J. Libby (Eds.). 1993. Clonal Forestry I: Genetics and biotechnology, Clonal Forestry II: Conservation and application. Springer - Verlag. Berlin]. Production of plants from a tissue culture gives rise to two major problems: increasing the number of obtainable regenerants and rooting same. For the first problem to be solved, a culture medium is added with growth regulators having cytokinin activity. However, formable shoots are "overfed" with cytokinin and, hence, a poor rooting. Programs of a gradual elimination of cytokinins, addition of various growth regulators of auxin action, as proposed, call for much time and do not yield results all the time. The long-term cultivation of plant tissue in vitro is likely to cause undesirable mutations. To improve the efficiency of clonal multiplication, a more delicate regulation of plant regeneration is required (Tree Physiol. 2000 Aug; 20(14):921-8; Curr Opin Biotechnol. 2000 Jun; 11(3): 298-302; Methods Mol Biol. 1999; 111:127-34).

Production of haploid plants is used for affixing a heterosis effect in hybrides. With normal seed multiplication, the optimal combination of parental genomes disintegrates in no time and, therefore, the heterosis does not last more than 1-2 generations. To fix hybrid genotypes, from the pollen of the best plants F₂ there are produced haploid plants, with the number of chromosomes redoubled thereafter. The dihaploid plants so obtained can normally blossom and produce seeds. Owing to the fact that the pairing chromosomes are identical, the properties of such a hybrid remain invariable in multiplication. To obtain haploids, an in vitro culture is added with anthers or isolated pollen grains at the earlier stages of development and induced is somatic embryogenesis or callusogenesis. The probability of producing a haploid plant does not exceed 5-10% of the number of sown anthers and much depends on the genotype of initial plants. As a rule, albinism is more often than not met among the regenerants. The major task in producing the haploids is reprogramming of the pollen grains from normal development (germination) to somatic embryogenesis. Exogenous regulation with phytohormones performs poorly in this particular case. Some signals are necessary to change the synthesis or activity of endogenic growth regulators.

Somatic hybridization is a process of fusion of isolated protoplasts which are derived from plant cells. It permits surmounting barriers of lack of capacity for hybridization with remote hybridization, allows to obtain the unique combinations of neuclear and plastome genomes of the parents. Methodically the somatic hybridization is based on variously induced fusion of the protoplasts with the subsequent restoration of a cell wall on special culture media, division of a hybrid cell and formation of a callus. Plants are then regenerated from the callus. The simplest in these methods are derivation and fusion of the protoplasts; it is more difficult to succeed in dividing the hybrid cell and the most difficult moment is the regeneration of plants from the calluses formed.

Separation of plant tissue and cultivating same in simulated conditions induce genetic variability, which is also manifest in plants to be produced from cultivated cells. This phenomenon called somaclonal variability can be used along with induced mutagenesis to enhance the genetic variety of agricultural plants. Using selective culture media, one can directly in in vitro culture to identify cells with specified features to produce plants therefrom. Cell selection is generally used for enhancing the resistance of plants to diseases and pests and such unfavourable environmental factors as drought, salination, extreme temperatures, flooding, to mention only few. There have been developed selective systems directed at enhancing specific and/or nonspecific resistance.

A combination of methods of traditional and cell selectivity has already allowed to obtain the improved forms and new varieties of tomatoes, sugar cane, rice, barley, potatoes, spinach, forage grass and some other kinds of plants having resistance to biotic and abiotic stresses and high productivity [Karp A. Somaclonal variation as a tool for crop improvement //Euphytica, 1995, v. 85, p. 295-302].

New possibilities to create new varieties are proposed by genetic engineering. Due to incorporation of genes of bacterial or plant origin there have been produced agricultural plants which are tolerant to pests, herbicides, adverse climatic conditions. Some plants have an increased content of protein and indispensable amino acids, AQ'd oil, etc. (Ya. I. Bouryanov "Successes and prospects of genetic bioengineering of plants. //Physiology of plants-1999- v.46 - No 6 - pp. 930-944/. Almost all methods of genetic transformation include the steps of in vitro tissue culture and the regeneration of plants from transgenic cells.

Thus, the efficiency of use of all cell biotechnologies depends on the possibility to produce a plant from cultivated cells (Plant Cell Culture Protocols. Second edition. V.M.Loyola-Vargas and F. Vazquez-Flota (eds). Humana Press, Mexico, 2005, 416 pp.; Plant Tissue Culture. 100 years since Gottlieb Haberlandt. M.Laimer and W.Rucker (eds.) Springer, Wien New York, 2003, 260pp.).

A major obstacle to a wide variety of utilization of cell cultures in selection is a low regenerative ability of many lines and varieties. For example, in cotton plants a high capacity to morphogenesis is featured by variety Coker and derivatives thereof and a majority of the rest of varieties have a reduced or zero regeneration potential (Theor Appl Genet. 2004 Aug; 109(3):472-9). A great problem is production of regenerants in some legumes, specifically soya that is of substantive importance (Planta. 2004 Oct; 219(6): 1042-9). In cereals a real capability to morphogenesis is shown by only cell cultures being produced from germs (Vasil V., Chin Yu.L., Vasil I.K. Histology of somatic embryogenesis in cultured immature embryos of maize (Zea mays L.)//Protoplasma, 1985, v. 127, pp. 1-8). And a possibility of plants being regenerated strongly depends on a genotype (J Exp Bot. 2005 Jul; 56 (417): 1913-22). In maize a plurality of commercial hybrids is characterized by a low morphogenetic potential (Phillips R.L., Somers D.A., Hiberd K.A. Cell/tissue culture and in vitro manipulation. In: Corn and Com Improvement - Agronomy Monograph 18. (Sprague G.F., Duddley J.W. eds) Am. Soc. of Agronomy, Madison, WI, 1988, p. 345-387).

Mind you - - regeneration of plants from undifferentiated tissue and cells is a key stage in the production of any genetically modified plants.

**Selection of explant tissue**. Different plant tissues have a different capacity to form a morphogenic callus in in vitro culture. This is especially characteristic of monocotyledonous plants. The greatest regeneration potential is intrinsic in meristematic tissues: immature germs, inflorescenes, meristem in tillering nodes and leaf bases. The differentiated tissues of leaves or roots have a low capacity to callusogenesis. So if the task is to produce plants from cultivated cells, it is necessary to obtain a callus from competence tissues (Phillips R.L., Somers D.A., Hiberd K.A. Cell/tissue culture and in vitro manipulation. In: Com and Com Improvement - Agronomy Monograph 18. (Sprague G.F., Duddley J.W. eds) Am. Soc. of Agronomy, Madison, WI, 1988, p. 345-387).

**Variations of hormonal culture medium formation.** The main method to change over cells from disorganized growth to a way of differentiation is a change in the concentration and relationship of hormones. For many varieties of plants to be regenerated, concentration should be increased in a medium of cytokinins (Adv Biochem Eng Biotechnol. 2001; 72:157 - 82). The morphogenesis optimal relationship and concentration of phytohormones in a culture medium are species - and even variety-specific owing to which fact in case of new varieties or species of plants being introduced one will have to select the conditions of morphogenesis anew. In some cases, said morphogenesis is made more likely in replacement of conventionally usable natural and synthetic phytohormones with substances of a different chemical nature but having hormonal activity. However, while screening a great number of varieties, various authors indicated that stimulation is likewise variety-specific and in the event of success, the frequency of plant regeneration increased by no more than 20% /Wilkinson, Thompson, 1987/, /Ignatova et al., 1993; S. Dias, Yu.I.Dolgikh. Role of physiological factors in raising efficiency of the regeneration of plants from maize tissue culture. Biotechnology, 1997, No 11-12, pp. 32-36/.

Ethylene produced distinct effects on the regenerative capacity of a callus. The addition to a culture medium for initiating the callus, of the precursors of an ethylene of 1-aminocyclopropanecarboxylic acid or aminoethoxyvinyl glycine considerably reduced the frequency of formation of an embriogenic callus and the number of the resultant regenerants by 68% [Songstad D.D., Duncan D.R., Widholm J.M. Effect of 1-aminocyclopropane-1-carboxylic acid, silver nitrate and norbomadiene on plant regeneration from maize callus cultures//Plant Cell Rep., 1988, v. 7, p. 262-265.] [Vain P., Flament P., Soudain P. Role of ethylene in embryogenic callus initiation and regeneration in Zea mays L.//J.Plant Physiol, 1990, v. 135, p. 537-540]. Incorporation in a medium of substances inhibiting the physiological effect of the ethylene - norbomadiene or silver nitrate, on the contrary, stimulated the formation of the embriogenic callus and raised the efficiency of regeneration in the majority of tested genotypes by 15-20% [Vain P., Flament P., Soudain P. Role of ethylene in embryogenic callus initiation and regeneration in Zea mays L.//J.Plant Physiol, 1990, v. 135, p. 537-540]. [Hoisington D.A., Bohorova N.E. Towards the production of transgenic tropical maize germplasm with enhanced insect resistance. In: Current issues in Plant Molecular and Cellular Biology (Terzi M., Cella R., Falavigna A. eds.), Kluwer Acad. Publishers., Netherlands, 1995, p. 327-221].

In some cases, the addition to a medium, of abscisic acid intensifies morhogenesis. In wheat, treatment with abscisic acid (ABA) in a micromolar concentration inhibited the early germination of isolated germs and stimulated the formation of an embryogenic callus [Brown C., Brooks F.J., Pearson D., Mathias R.J. Control of embryogenesis and organogenesis in immature wheat embryo callus using increased medium osmolarity and abscisic acid//J. Plant Physiol, 1989, v.133, p. 727-733; Carman J.G. Improved somatic embryogenesis in wheat by partial simulation of the in-ovulo oxygen, growth-regulators and desiccation environments //Plants, 1988, v.175, p. 417-424; Shayakhmetov I.F., Shakirova F.M. Formation of somatic embryoids in a suspension wheat cell culture in the presence of ABA //Physiology of plants, 1996, v.43, pp. 101-103/. In rape and maize tissue culture, an influence exerted by ABA on plant regeneration was positive for some varieties and negative for others [Raldougina G.N., Sobol'kova G.I. Genotypical differences in case of callus cultures of Brassica napus L. being acted upon by abscisic acid //Physiology of plants, 1994, v.41, pp. 702-706; Yu.I.Dolgikh, T.N. Pustovoitova, N.E. Zhdanova. Hormonal regulation of somatic embryogenesis on maize. In Phytohormones in Plant Biotechnology and Agriculture, Proceedings of NATO-Russia Internation Workshop, Kluwer Academic Publishers, 2003, p. 243-247].

Rather frequently none of the media used provides for producing regenerant-plants [Armstrong C.L., Romero-Severson J., Hodges T.K. Improved tissue culture response of an elite maize inbred through backross breeding, and identification of chromosomal regions important for regeneration by RFLP analysis //Theor. Appl. Genet., 1992, v.84, p. 755-762].

**Incorporation of individual amino acids in media.** An increase in morphogenetic potential was characteristic of some cultures, with certain amino acids introduced in media. For example, for wheat use is made of media with arginine, for maize - with proline [Salmenkallio M., Sopanen T. Amino Acid and Peptide Uptake in the Scutella of Germinating Grains of Barley, Wheat, Rice, and Maize//Plant Physiol. 1989, v.89. p. 1285-1291]. The proline is recommended for use in high concentrations for the purpose of increasing the frequency of formation of a porous embriogenic callus retaining a regenerative capacity for a remarkably long time [Duncan D.R., Williams M.E., Zehr B.E., Widholm J.M. The production of callus capable of plant regeneration from immature embryos of numerous Zea mays genotypes //Planta, 1985, v. 165, p. 322-332]. According to Rapela's data, incorporation in media of 400 mg/I proline increased 2-3 times the frequency of formation of the embryogenic callus and plant regeneration [Rapela M.A. Organogenesis and somatic embryogenesis in tissue culture of Argentine maize (Zea mays L.)//Plant Physiol, 1985, v. 121, p. 119-122]. In another work, the proline in a concentration of 20 mM increased the number of regenerants per explant from 2.8 to 7.6 [Kamo K.K., Becwar M.R., Hodges T.K. Regeneration of Zea mays L. from embryogenic callus/Bot.Gaz., 1985, v. 146, p. 327-334]. Data on the use of asparagine are varied: alonsgise the stimulation of somatic embryogenesis in tissue cultures of maize [Lupotto E. In vitro culture of isolated somatic embryos of maize (Zea mays L.)//Maydica, 1986, v. 31, p. 193-201; Morocz S., Donn G., Nemeth J., Dudits D. An improved system to obtain fertile regenerants via maize protoplasts isolated from a highly embryogenic suspension culture //Theor. Appl. Genet., 1990, v.80, p. 721-726] also observed was its oppression [Kamo K.K.,Becwar M.R., Hodges T.K. Regeneration of Zea mays L. from embryogenic callus//Bot. Gaz., 1985, v.146, p. 327-334]. A mechanism of an influence said proline or said asparagine exerts on capability to morphogenesis is not described.

**Influence of oligosaccharides.** Oligosaccharides form during disintegration of the cell walls of plants. With that so, a xyloglucan pentasaccharide enhances 1.5-2 times the morphogenesis of wheat tissue culture [Pavlova Z.N., Ash O.A., Vnuchkova V.A., Babakov A.V., Torgov V.L, Nechaev O.A., Usov A.I., Shibaev V.N. Biological Activity of a Synthetic Pentasaccharide Fragment of Xyloglucan//Plant Sci. 1992 V. 85. P.131-134] and a three-membered oligosaccharide promoted the somatic embryogenesis of cotton plant [Dolgikh Yu.I., Shaikina E.Yu., Usov A.I., Shibaiev V.N., Kuznetsov Vl.V. A three-saccharide fragment of xyloglucan as a regulator of morphogenesis in plants //Report of the Academy of Sciences. 1998. V. 360. P. 417-419].

**Electrostimulation of morphogenesis.** It has been found that weak d.c. (1-2 mcA) passed thru calluses stimulates shoot regeneration. Tobacco callus mass increased under the action of I mcA current by 70% and the number of formable shoots increased five times [Goldsworthy A. The electric compass of plants //New Sci., 1986, N I, pp. 22-23.]. Shown on a wheat callus was a double potentiation of rhisogenesis and the formation of shoots with a full absence thereof in the control [Rathore K.S., Goldsworthy A.Electrical control of shoot regeneration in plant tissue culture //Bio/technology, 1985, v.3, p.1107-1109]. Also detected was the stimulation of somatic embryogenesis in the protoplast culture of lucerne [Dijak M., Smith D.L., Wilson T.J., Brown D.C.W. Stimulation of direct embryogenesis from mesophyll protoplasts of Medicago sativa//Plant Cell Rep., 1986, v. 5, p. 468-470], activation of shoot formation in cabbage, poplar, maize [Wang X., Wang Q., Song M., Zheng E. Effect stimulation with weak electric currents on in vitro culture of cabbage//Acta Bot. Sinica, 1993, v. 35, Suppl., p. 66-70; Dutta R. Studies on the mechanism of electrically induced growth and differentiation in plants in vitro: the cytomorphological profile. Abstr. VIII Intern. Congr. "Plant Tissue and Cell Culture", Florence, Italy, 1994, p.49; G.B. Kitlaiev, Yu.I. Dolgikh, R.G. Boutenko. Physiological effect of an electric current on a cell culture of maize in vitro. Reports of the Academy of Sciences, 1994, v. 335, No 3, pp. 393-395]. Stimulation of plant regeneration under the action of electric currents does not depend on a species and variety of plants, albeit there can be quantitative variations. The use of this method of increasing the frequency of plant regeneration is limited by the need to have rather complicated apparatuses and by low transmissive capacity.

### Concept of the Invention

It is the principal object of the present invention to provide the concentration of bioactive substances in the mitochondrions of a living cell by using the energy of an electrochemical potential of hydrogen ions and Skoulachev ions. Such an approach allowed to reduce a dosage of usable active bioactive substances many a time; it is directed at effectively acting on the mitochondrions which are a key element in the most important intracellular processes, which fact, as appeared, affords an opportunity to reduce the likelihood and power of undesirable side effects many times.

It is hence only logical to deduce that the main aspect of the present invention is a method of acting on plants using compositions containing bioactive substances, with address delivery thereof to a mitochondrion.

The general chemical structure of address-directed bioactive compounds has the following general formula (1): 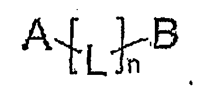 wherein A - effector group-antioxidant 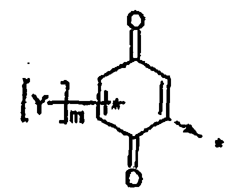 and/or its restored form
wherein m - integer from 1 to 3; Y - different or identical substituents representing lower alkyl or lower alkoxy; or two vicinal Y are so interrelated as to form the structure: 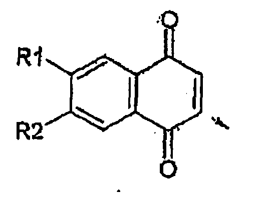 and/or its restored form
wherein R1 and R2 are different or identical substituents, each independently being lower alkyl or lower alkoxy; L - linker unit representing:
a) single or branched hydrocarbon chain, optionally substituted with one or more substituents and, in case of necessity, comprising one or more double or triple bonds;
b) natural isoprenoid chain;
   n - integer of I to 20;
   B - represents

a) Skoulachev - ion Sk:

   Sk⁺ Z"

   wherein Sk - lipophilic cation;
   Z -acceptable anion;
b) charged hydrophobic peptide of 1-20 amino acids
   except for compounds in which A is ubiquinone (2-methyl-4,5-dimethoxy-3,6-dioxo-1,4-cyclohexadienyl) or tocopherol or the mimetic of a superoxidedismutase or ebselen, besides that L - divalent decyl or divalent pentyl or divalent propyl and B - triphenylphosphomim; as well as its solvates, isomers, agrochemically or physiologically acceptable salts.

Another aspect of the present invention is a composition for the address delivery of a bioactive substance to the mitochondrions of a cell usable for regeneration, stimulation of a plant growth and including a compound of the structure (II), wherein A is a residue of plastoquinone of the formula: 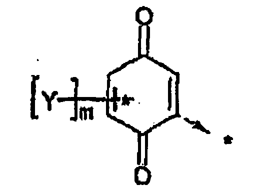 Y - methyl, m=2;
L - linker unit representing:
a) single or branched hydrocarbon chain, optionally substituted with one or more substituents and, if necessary, containing one or more double or triple bonds;
b) natural isoprenoid chain;
   n - integer from 1 to 20;
   B - represents

a) Skoulachev - ion Sk:

   Sk⁺ Z"

   wherein Sk - lipophilic cation;
   Z -acceptable anion;
b) charged hydrophobic peptide of 1-20 amino acids
   except for the compounds in which A represents ubiquinone (2-methyl-4,5-dimethoxy-3,6-dioxo-1,4-cyclohexadienyl) or tocopherol or the mimetic of a superoxidedismutase or ebselen, besides that L - divalent decyl or divalent pentyl or divalent propyl and B - triphenylphosphomim; as well as its solvates, isomers, agrochemically or physiologically acceptable salts.

A further aspect of the present invention is a composition for surmounting various stress factors by plants that includes a compound of the structure (1) - SkQ1

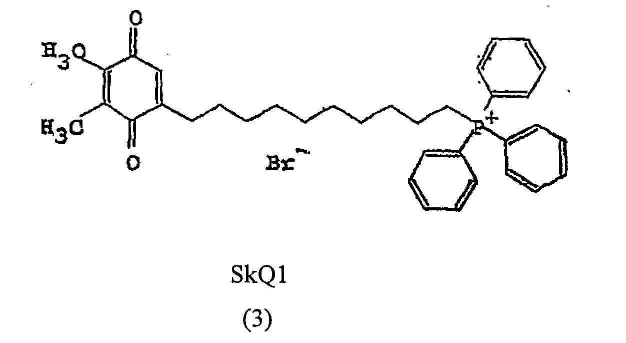

A still further aspect of the present invention is a substance conforming to the structure (1), which can be used for stimulating plant regeneration from tissue and undifferentiated cells cultivated in simulated conditions; for accelerating seed germination; for increasing the germination of old, time-expired seeds; for stimulating plant regeneration from the cuttings (rooting); for increasing the time of florescence; for increasing the time of stand of the sheared flowers; for increasing a biomass of plants and fruits; for preventing a falling-off of fruits; for raising the resistance of plants to toxic chemicals; for enhancing the resistance of plants to biotic and abiotic stresses (salinity, temperature gradients, changes in light conditions) as well as for raising a resistance towards phytopathogenes.

One more aspect of the present invention is an agrochemically or physiologically acceptable composition for acting on plants and/or seeds of plants, conrtaining the agrochemically or physiologically justifiable amount of a compound of structure (1) and at least one agrochemically or physiologically acceptable diluent or a filler. The physiologically acceptable diluent or filler may represent a solvent, a solid carrier or a surfactant. In other words, the agrochemically or physiologically acceptable composition for acting on plants and/or seeds of plants that is in compliance with the present invention can be used in the form of sprays, emulsified concentrates, suspended concentrates, concentrated solvents, spreading pastes, diluted emulsions, soluble powders, dispersive powders, wettable powders, dust, granules or incapsulated in polymeric material.

An illustration of acceptable solvents is afforded by alcohols: ethanol, propanol or butanol; glycols and ethers or esters thereof; such as propylene glycol, dipropylene glycol ethers, ethylene glycols or ethylene glycol monomethyl ethers; ketones, such as cyclohexanon, isophorone; water, non-epoxided or epoxided vegetable oils, such as non-epoxided or epoxided rape, castor, coconut or soya oils.

Examples illustrating acceptable solid carriers: natural minerals, such as calcite, talc, kaolin, montmorillonite or attapulgite. Also used are other granulated inorganic or organic compounds, for example, dolomite or crushed plant fragments.

Examples illustrating acceptable surfactants: nonionic, cation and/or anionic surfactants depending on the type of an active ingredient within a composition.

By plants suitable for action with an active ingredient or a composition conforming to the present invention is implied any biological object relating to a kingdom of plants according to a classification universally adopted in biology.

The compound of structure (1) can be used both alone and in combination with the addition of natural and synthetic phytohormones (for example, 2,4-dichlorophenoxyacetic acid, cytokinins, abscisic acid, 3,6-dichloro-orthoanisic acid, chloramben, tricambu, to mention only few), the compounds inhibiting the physiological action of ethylene (for example, norbomadiene, silver nitrate, etc.), individual acids, oligosaccharides as well as with the subsequent electrostimulation or other physical actions.

### Examples of agrochemically acceptable compositions are given below in Tables.

### I. Example of compositions for stimulating the regeneration of plants in the form of solvents:

**Table 1.1**

| Component | Role of component | Approximate amount |
|---|---|---|
| SkQ1 | Active compound | 1-50 µg |
| Water | Diluent | 1000 ml |

**Table 1.2**

| Component | Role of component | Approximate amount |
|---|---|---|
| SkQ1 | Active compound | 1-50 µg |
| Water | Diluent | 1000 ml |
| 10 mM Na-phosphate buffer, (pH 4,5-6,5) | Diluent | |

### 2. Example of compositions for stimulating regeneration of plants in the form of watersoluble granules:

**Table 2.1**

| Component | Role of component | Approximate amount |
|---|---|---|
| SkQ1 | Active compound | 45.6% |
| Lactose monohydrate | Disaccharide | 50.6% |
| Polyvinyl-pyrrolidone | Binder compound | 0.8% |
| Co-polymers of ethylene oxide and propylene oxide | Surfactant compound | 3.0% |

**Table 2.2**

| Component | Role of component | Approximate amount |
|---|---|---|
| SkQ1 | Active compound | 45.6% |
| Lactose monohydrate | Disaccharide | 51.9% |
| Polyvinylpyrrolidone | Binder compound | 1.0% |
| Tween 20 | Surfactant compound | 1.5% |

### 3. Example of spray for stimulating plant regeneration:

**Table 3**

| Component | Role of Component | Approximate amount |
|---|---|---|
| SkQ1 | Active compound | 0.1-1.0% |
| Vegeol SPO^{™} | Surfactant Compound | 0.01-1.0% |
| Tween 20 | Surfactant Compound | 0.01-0.1% |
| Liquid plant wax jojoba | Compound inhibiting penetration of formulation into plant | 0.01-0.1% |
| Plastinol^{™} | Compound inhibiting penetration of formulation into plant | 0.01-0.1% |
| Guar gum | Compound preventing evaporation of formulation | 0.1-0.3% |
| Tixoseal^{™} | Compound forming coating on particles | 0.01-0.05% |
| Difluorodichloromethane | Compressed fluid | |

### 4. Example of medium for plant regeneration

**Table 4**

| Component | Role of component | Approximate amount |
|---|---|---|
| SkQ1 | Active compound | 1-1000 HM |
| Agarose medium Murasige-Skuga | medium | 1000 ml |
| Saccharose | osmotic | 30 mg/l |
| 2,4-dichlorophenoxyacetic acid | phytohormone | 1 mg/l |

| | | |
|---|---|---|
| 5. 1-50 nM SkQ1 within media for hydroponics. | | |

### Brief description of figures

Fig. 1. SkQ1 stimupates the formation of shoots from the undifferentiated sugar cane tissue.
Fig. 2. Development of sugar cane shoots on media for regeneration after SkQ1 (10 nM) induced shoot formation.
Fig. 3. A sugar cane plant produced from a callus by stimulating regeneration by means of 10 nM SkQ1.
Fig. 4. SkQ1 stimulates the formation of roots from undifferentiated tobacco tissue.
Fig. 5. Influence of various SkQ1 concentrations on the formation of shoots and roots from maize calluses.
Fig. 6. SkQ1 influence on the formation of a lucerne embryogenic callus.
Fig. 7. SkQ1 in 1 nM concentration sharply raises the germination of rice seeds under water.

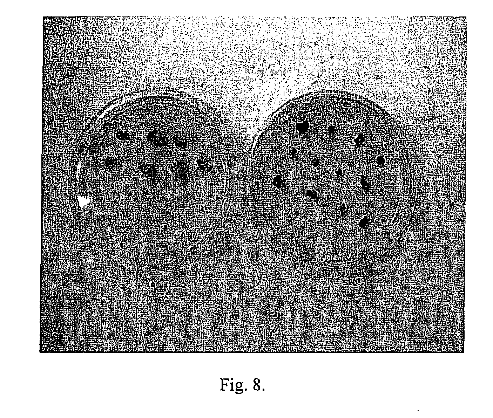

Fig. 8. SkQ1 enhances the resistance of sugar cane calluses to anaerobic stresses.

### Execution of the Invention

In the context of the present invention, implied by the terms, unless otherwise defined further, are:
"parts of a plant" - leaves, stems, shoots, roots, flowers, fruits, cuttings and any other plant organs;
"plant material" - separate parts and organs of a plant, specifically leaves, stems, shoots, roots, flowers, fruits, cuttings and any other plant organs;
"culture" - artificially cultivated plant cells;
"plant regeneration" - reproduction of a full value plant from any parts of the plant or plant cell cultures;
"plant tissue" - undifferentiated or differentiated communities of plant cells performing a specific function;
"undifferentiated plant cells cultivated in simulated conditions" - same as the cultures and also plant calluses;
"treatment" - any procedure of acting on a plant, plant parts, plant material or culture;
"effective amount" - amount that is enough to provide a significant effect;
"old, time-expired seeds" - seeds which lost germination due to long-term storage;
"phytopathogens" - include fungi, nematodes, protozoa, insects, bacteria, and viruses;
"suppression of protective reactions in a plant" - suppression of necrotizing processes, programmed cell death caused by infection with phytopathogenic fungi, nematodes, protozoa, insects, bacteria, particularly viruses and viral vectors genetically modified, usable for the production of recombinant proteins.

Given below is a number of experimental examples to illustrate the possibility to execute an invention, particularly the action of substances conforming to a structure (1) according to the invention. Said examples should only confirm the soundness of teachings and shouldn't be perceived as limiting a field of its use or application.

### Production of full value sugar cane plants from calluses induced to regeneration using SkQ1

Work was carried out on the calluses and explants of tobacco, sugar cane, maize, lucerne, potatoes and tomatoes. The calluses were incubated in Petri dishes on agarose media Murasige-Skuga with 30 mg/l sucrose and 1 mg/l 2,4D. Cultivation was carried out at 26°C, illumination intensity 2 k1; duration of light day of 16 hrs. SkQ1 was added to an autoclaved and 45°C-cooled culture medium just before planting the callus. Use was made of SkQ1 concentrations of 0, 1.5, 5, 10, 20, 30 and 50 nM. One month after cultivation, account was taken of raw callus mass, a portion of calluses with shoots and roots and an average number of organs for a morphogenic callus.

### SkQ1 induces regeneration of various calluses of wide variety of plants Induction of embryogenic callus

### Sugar cane

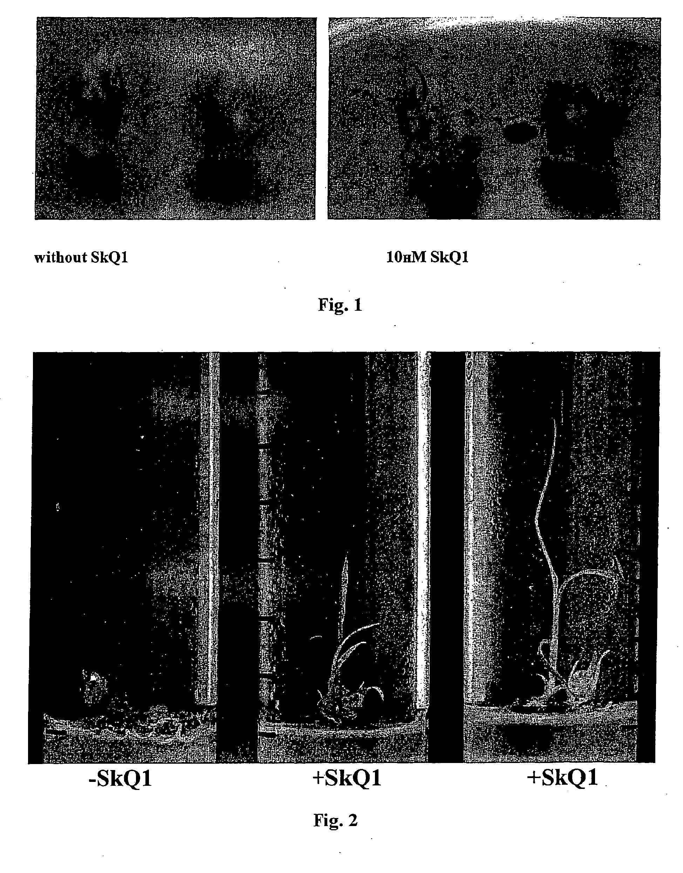

It has been found that beginning from the 19^{th} day of incubation, SkQ1 in low concentration (10 nM) causes the formation of shoots from calluses (Fig. 1). The control calluses did not show signs of shoot formation. In the presence of higher concentrations of SkQ1, the shoot formation was observed, though, but in later periods (after the 31^{st} day) and on a smaller number of calluses.

On transfer of calluses with the shoots formed on a SkQ1-containing (10 nM) medium to an agarose medium for regeneration, the formable shoots kept on developing normally in the presence of 10 nM SkQ1 (Fig.2). At the same time, the calluses transferred to said regeneration medium from a SkQ1-free medium barely started to give the shoots.

The presence of higher SkQ1 concentrations in a regeneration medium was accompanied by cessation in a further development of shoots (100 nM SkQ1) or ended in the death of shoots (1000 nM SkQ1).

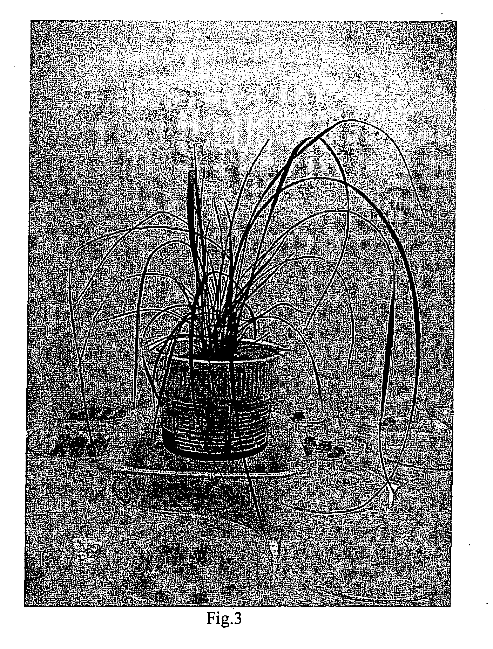

To produce full value plants, sugar cane shoots formable under the action of 10 nM SkQ1 were transferred to an agarose rooting medium containing the same optimal concentration of SkQ1 (10 nM). On formation of roots, plants were transferred to an aqueous medium and replanted in the earth. The state of plants was assessed at each and every stage. It is shown that the sugar cane shoots formable with the induction of the 10 nM SkQ1 normally take roots and provide full value viable plants - Fig. 3.

Be it noted that the shoots formable on a 100 nM and 1000 nM SkQ1 medium and further cultivated on a medium with the same high SkQ1 concentrations proved to be nonviable and perished.

### Tobacco

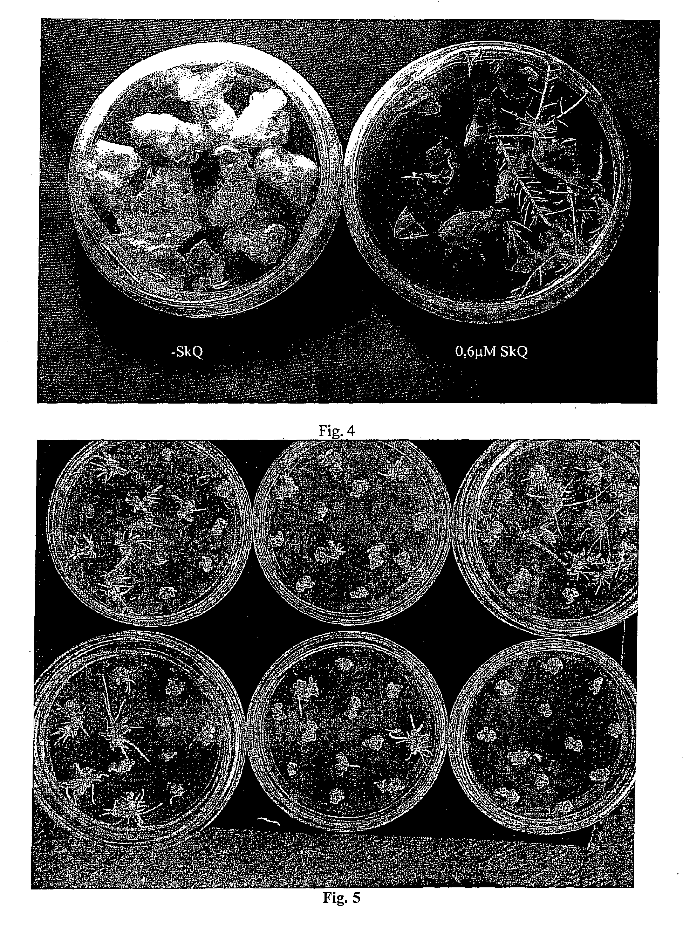

Investigations were carried out of an influence SkQ exerts on a process of callus formation (dedifferentiation) in the explants of tobacco leaves. The sterile leaf discs of plants Nicotiana tabacum cv Samsun were cut into pieces of about 1 cm² in size. The explants thus obtained were placed on a standard MS medium for callus formation comprising 6 - benzylaminopurine phytohormones in a concentration of 0.5 mg/l and naphthylacetic acid in a concentration of I mg/I. Test Petri dishes were added with SkQ in a concentration of 0.6 mcM. The explants were cultivated in the dark for 5 weeks. During incubation, the callus formed first on the wound surfaces of the explants followed by the start of a secondary differentiation of callus tissue in the explants of the test Petri dishes containing SkQ with the formation of roots. In the control SkQ-free Petri dishes no root formation was observed (Fig. 4). In further incubation in the test Petri dishes, the portions of explant differentiated tissue were necrotized and died off (this is not related to the newly formed differentiated tissue of roots which felt well), whilst a process of the normal dedifferentiation of explant tissue was observed in the control Petri dishes.

### Maize

### 1. Investigations were carried out of an influence of SkQ1 exerted on callus induction on the immature germs of maize, which are the best type of explant for forming an embryogenic callus, i.e. the callus whose cells can be differentiated into embryoids. In its turn, the induction of a morphogenic callus is a key stage of regeneration of maize plants that is most difficult to yield to exogenous regulation. A majority of commercial varieties have low morphogenetic potential.

The immature germs of maize on the most favourable stage of development were placed on a culture medium containing SkQ1 in various concentrations of between 0.5 and 10 nM. Higher concentrations were not used because in concentrations of 20 nM and higher, SkQ1 inhibited morphogenesis and more than that influence on shoot formation was stronger than on rhizogenesis (Fig. 5). The germs were cultivated on said media either constantly for a month or were replanted on a SkQ1-free medium a week later.

In a maize variety Luchistaya in the control there formed only a nonembryogenic callus. On a silver nitrate medium (morphogenesis standard inductor) and also in variants of 5 and 10 nM SkQ1, part of germs formed an embryogenic callus, the best variant being that of incubation of germs on the 10 nM SkQ1 medium during a week followed by replanting on a medium lacking same (Table 5).

**Table 5. SkQ1 influence on induction of embryogenic callus of maize (variety Luchistaya)**

| Medium variant | Number of germs | Germs with embryogenic, callus, % | Preservation of embriogenic property in passage 2, % |
|---|---|---|---|
| Standart (II) | 70 | 0 | - |
| Π+AgNO₃ | 98 | 14,3 | 4,1 |
| Π+5 nM SkQ | 96 | 4,2 | 2,1 |
| Π+10 nM SkQ | 62 | 16,4 | 0,0 |
| Π+10 nM SkQ 1 week | 39 | 46,2 | 23,1 |

The embryogenic callus so obtained was replanted on a SkQ1-free medium. Regenerative capacity was retained substantially only in a callus induction variant on a 10 nM medium during a week.

An experiment of the same run was repeated on the maize germs of another variety - LG-1 that does not normally form an embryogenic callus. A SkQ1 stimulating effect was shown in low concentrations. A degree of stimulation was appreciable, albeit an actual portion of the embryogenic callus remained low (Table 6). Maximum (10%) was approximately the same as the stimulation of formation of an embryogenic callus when acted upon by silver nitrate. Given the short-time SkQ effect against a background of the silver nitrate, no stimulation was detected.

**Table 6. SkQ1 influence on induction of embryogenic callus of maize (variety LG-1)**

| Medium, variant | Number of germs | Germs with embryogenic, callus, % |
|---|---|---|
| Standart (II) | 80 | 2,5 |
| Π+AgNO₃ | 44 | 8,3 |
| Π+0,5 nM SkQ1 | 78 | 5,1 |
| Π+1,0 nM SkQ1 | 40 | 10,0 |
| Π+5 nM SkQ1 | 86 | 0 |
| Π+10 nM SkQ1 | 88 | 0 |
| Π+AgNO3+0,5nM SkQ1 | 56 | 7,1 |
| AgNO₃+1,0 nM SkQ1 | 54 | 7,5 |
| AgNO₃+5 nM SkQ1 | 54 | 7,5 |

### Induction of morphogenesis in primary nonembryogenic callus

### Wheat

From the immature germs of wheat (variety "Enita") derived on a stage non-optimal for the formation of an embryogenic callus there was produced a low-morphogenic callus. The frequency of regeneration of plants from such tissues is very low. While replanting the low-morphogenic callus of wheat on media with the addition of SkQ1, a portion of calluses with shoot rudiments grew significantly (Table 7).

**Table 7. SkQ1 influence on formation of morphogenic calluses of wheat**

| Medium, variant | Number of calluses | Morphogenic calluses | Portion of morphogenic calluses % |
|---|---|---|---|
| 0 (Control) | 128 | 12 | 9,4 |
| SkQ1 10 nM | 96 | 62 | 64,6 |

### Lucerne

Investigations were carried out of an influence SkQ1 exerts on the induction of morphogenesis in a callus of two species of lucerne. After one month of cultivation in the presence of SkQ1, the stimulation of morphogenesis was observed in both species with the concentration of 5 nM (Tables 8, 9). A higher dose inhibited a callus growth and morphogenesis.

**Table 8. SkQ1 influence on growth and formation of morphogenic callus in lucerne of species Medicago glutinosa (variety Π-66)**

| Concentration SkQ1, nM | Number of calluses | Callus, average weight | | Number of calluses with "green" foci | |
|---|---|---|---|---|---|
| | | mg | %, to control | pieces | % |
| 0 (control) | 32 | 287±19 | 100 | 16 | 50 |
| 0,5 nM | 32 | 231±17 | 80 | 19 | 59,4 |
| 1 nM | 43 | 242±17 | 84 | 15 | 34,9 |
| **5 nM** | **30** | **300±15** | **104** | **30** | **100** |
| 10 nM | 32 | 178±10 | 86 | 6 | 18,8 |

**Table 9. SkQ1 influence on growth and formation of morphogenic callus in lucerne of species Medicago falcata_ (variety T-425)**

| Concentration SkQ1, nM | Number of calluses | Callus, average weight | | Number of calluses with "green" foci | |
|---|---|---|---|---|---|
| | | mg | %, to control | pieces | % |
| 0 (control) | 31 | 180±16 | 100 | 10 | 32,3 |
| 0,5 nM | 32 | 153±12 | 85 | 0 | 0 |
| 1 nM | 30 | 160±15 | 89 | 2 | 6,7 |
| **5 nM** | **30** | **190±11** | **105** | **28** | **93,3** |
| 10 nM | 30 | 154±15 | 86 | 0 | 0 |

In another experiment, a lucerne callus after monthly cultivation on a medium for proliferation with SkQ1 was replanted on a medium for regeneration with the same concentrations of a compound assayed. On replanting on the regeneration medium on the same SkQ1 concentrations, there occurs an enhanced intensity growth with 0.5 nM and 1 nM concentrations. The concentration of 5 nM produced no stimulating effect on a callus growth but promoted the formation of a morphogenic callus (compared to the control). The concentration of 10 nM diminished a callus growth and was not conductive to the formation of the morphogenic callus (compared to the control) (Table 10).

**Table 10. Growth and formation of morphogenic callus in lucerne after cultivation on SkQ1 medium and then replanted on the same concentrations on regeneration medium**

| Concentration SkQ1, nM | Number of calluses | Callus, average weight | | Number of calluses with "green" foci | |
|---|---|---|---|---|---|
| | | mg | %, to control | pieces | % |
| 0 (control) | 32 | 257±14 | 100 | 10 | 31,3 |
| **0,5 nM** | **32** | **390±11** | **152** | 10 | 31,3 |
| **1 nM** | **30** | **308±17** | **120** | 6 | 20,0 |
| **5 nM** | 30 | 232±11 | 90 | **26** | **86,7** |
| 10 HM | 32 | 191±15 | 74 | 12 | 37,5 |

### Callus-passivated morphogenesis

### Maize

A maize eight-month passivated in vitro callus was incubated on media with various SkQ1 concentrations. At the end of a monthly passage, a portion of morphogenic calluses and tissues having shoots and roots was taken account of. Under the action of SkQ1 in 1 and 5 nM concentrations, an increased portion of calluses having the shoots was observed as was an average number of shoots per callus (Table 11).

**Table 11. SkQ1 influence on morphogenesis in passivated callus of maize**

| Concentration SkQ1, nM | 0 | 1 | 5 | 10 | 20 | 30 | 05 |
|---|---|---|---|---|---|---|---|
| Portion of calluses with shoots, % | 25,6 | 47,5 | 71,8 | 31,7 | 14,6 | 2,5 | 4,6 |
| Average number of shoots per callus | 1,1 | 1,6 | 2,0 | 1,6 | 1,0 | 0,5 | 0,5 |
| Portion of calluses with roots, % | 51,3 | 45,0 | 47,5 | 58,5 | 32,8 | 20,0 | 34,1 |
| Average number of roots per callus | 2,4 | 4,4 | 5,1 | 4,7 | 3,1 | 4,4 | 2,5 |

### Wheat

The passivated callus of wheat was cultivated on SkQ1 media. The state of calluses was analyzed a month later. It is found that the shoots of the control calluses are weakly distinct, albeit root formation is rather strong. This gives evidence of the fact that the production of normal plant-regenerants will be difficult. With a constant growth on 1 and 10 nM SkQ1 media there appeared regenerant-plants (Table 12).

**Table 12. SkQ1 influence on morphogenesis in wheat**

| Medium variant | Number of calluses | Morphogenic calluses | Calluses with shoots | Portion of calluses with shoots, % |
|---|---|---|---|---|
| 0 (control) | 70 | 35 | 10 | 14,3 |
| 1 nM | 70 | 50 | 30 | 42,9 |
| 5 nM | 90 | 70 | 0 | 0 |
| 10 nM | 90 | 70 | 35 | 38,9 |

### SkQ1 induces plant regeneration

In some species of plants, morphogenesis can be induced directly in explant cells with no callus formation. This type of differentiation is called direct plant regeneration.

### Tomatoes

The leaf discs of tomatoes of (variety "Zolotoi orekh") were placed on a medium for morphogenesis induction. In a month, shoot formation was observed at the edge of explants. SkQ1 in a concentration of 1 nM caused approximately a double increase in a portion of explants with the shoots (Table 13).

**Table 13. Regeneration of plants from leaf explants of tomatoes**

| Medium, variant | Number of explants | Number of regenerants | Portion of explants with regenerants, % |
|---|---|---|---|
| 0 (control) | 122 | 5 | 4,1 |
| 1 nM | 70 | 6 | 8,6 |
| 10 nM | 74 | 3 | 4,1 |
| 10 µM | 88 | 6 | 6,8 |

### Potatoes

The stem explants of potatoes were placed on a medium for inducing morphogenesis. The formation of shoots was observed a month later. The formation of regenerants was fixed only in the presence of 1 nM SkQ1 whose number was insignificant, though, even in this case (Table 14).

**Table 14. State of stem explants of potatoes**

| Medium, variant | Number of explants | Morphogenic explants | Regenerants |
|---|---|---|---|
| 0 (control) | 170 | 159 | 0 |
| 1 nM | 127 | 127 | 2 |
| 10 nM | 134 | 119 | 0 |
| 10 µM | 92 | 79 | 0 |

### SkQ1 increasing growth rate of calluses and suspension plant cultures

### Lucerne

Counted was a callus mass of two varieties of lucerne during one month. Growth index - relation of a final raw mass to the initial. Two varieties of lucerne featured stimulation of growth (Tables 15, 16).

**Table 15. Lucerne growth index of species Medicago falcate (T-425)**

| Variant | Grow index | %, to control |
|---|---|---|
| Control | 4,43 | 100 |
| 0,5 nM | 6,65 | 150 |
| 1 nM | 6,5 | 147 |
| 5 nM | 6,62 | 149 |
| 10 nM | 4,27 | 96 |

**Table 16. Lucerne growth index one month after cultivation of Medicago Glutinosa (Π-66)**

| Variant | Grow index | %, to control |
|---|---|---|
| Control | 1,85 | 100 |
| 5 nM | 4,52 | 244 |
| 10 nM | 1,14 | 62 |

Be it noted that the optimal concentration of SkQ1 even in this case is between 0.5 and 5 nM.

### Cell growth in suspension culture

Growth stimulation was also observed on a suspension culture of Thalictrum minus and Stephania glabra (tables 17, 18). The cells of these plants were cultivated on media with SkQ1 during 14 days (1 passage) to take account of an increased mass thereof and were then grown for another 14 days on a SkQ1-free medium and weighed again.

While investigating an influence of SkQ1 (0.5-10 nM), on the suspension cultures of Thalictrum minus and Stephania glabra there were revealed growth-stimulating concentrations. In the case of Thalictrum minus (0.5 and 1.0 nM) a cell mass increased by 7-17%; in the case of Stephania glabra (1.0 nM) a cell mass increased by 15%.

In a second passage (SkQ1 not introduced in medium), growth stimulation was 24 to 124% in all SkQ1 concentrations in the initial cell culture of Thalictrum minus and growth stimulation (45 to 48%) in a cell culture of Stephania glabra (in the initial concentration of 1.0 and 5.0 nM SkQ1). Thus, a stimulating effect was most strongly demonstrated on elimination of SkQ1 from the medium in the subsequent subcultivation. And a range of growth-stimulating SkQ1concentrations was expanded.

**Table 17. Influence of SkQ1 on intensity of growth of cell suspension culture of Thalictrum minus, % to the control**

| SkQ1, nM | Cell mass | |
|---|---|---|
| | 1 passage (+SkQ1) | 2 passage (-SkQ1) |
| 0 | 100 | 100 |
| 0,5 | 107 | 124 |
| 1,0 | 117 | 211 |
| 5,0 | 93 | 129 |
| 10,0 | 62 | 224 |

**Table 18. Influence of SkQ1 on intensity of growth of cell suspension culture of Stephania glabra, % to the control**

| SkQ1, nM | Cell mass | |
|---|---|---|
| | 1 passage (+SkQ1 ) | 2 passage (-SkQ1) |
| 0 | 100 | 100 |
| 0,5 | 99 | - |
| 1,0 | 115 | 145 |
| 5,0 | 78 | 149 |
| 10,0 | 64 | 69 |

### SkQ1 and anaerobiosis

### Germination of rice seeds under water

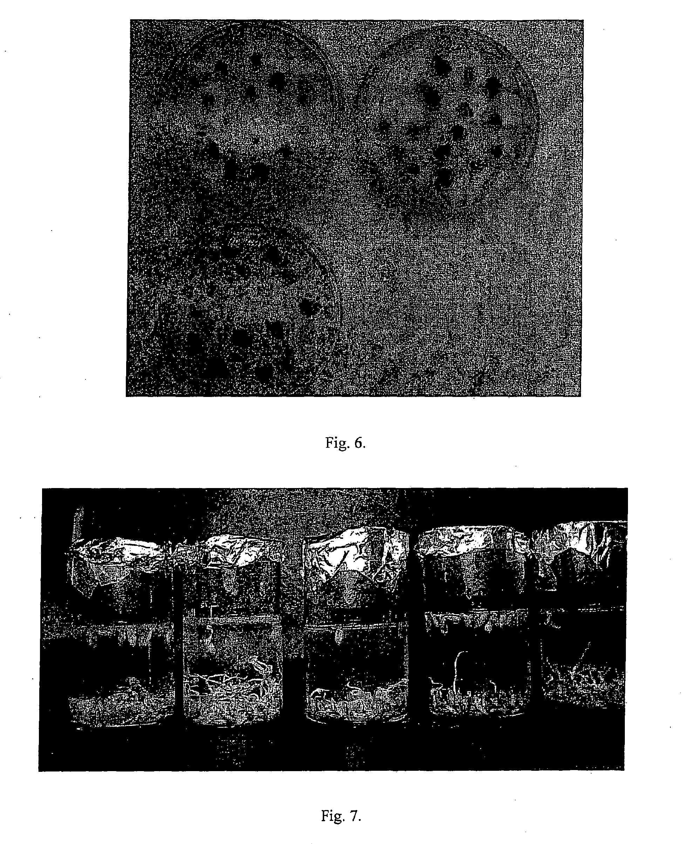

Investigations were carried out of an influence exerted by SkQ1 on the germination of rice seeds under water (in anaerobic conditions). SkQ1 was added to the water in concentrations of 0,1,3,10,30 nM. It is shown that SkQ1 in the concentration of 1nM appreciably intensifies the germination of rice seeds - Fig. 7. In higher concentrations, SkQ1 does not demonstrate said stimulating effect.

### Survival of sugar cane calluses after anaerobic stress

A quantitative evaluation of an influence exerted by SkQ1 on the viability of sugar cane calluses was made, which were incubated in anoxia conditions. The calluses of two lines were used. Stable line calluses are capable of maintaining viability (if only in part) with a substantially longer period of incubation in anaerobic conditions in comparison with sensitive line calluses. The calluses were incubated for 48 hrs (sensitive line) or 168 hrs (stable line) and then transferred in aerobic conditions to a medium containing 10 nM SkQ1 or not containing SkQ1. The viability of calluses was judged by a growth index thereof.

It has been found that an incubation on a SkQ1 medium considerably enhances the viability of cells in the case of both callus lines (Tables 19, 20).

**Table 19. Growth index of sugar cane callus of sensitive line after anaerobic incubation in glucosa-free medium**

| Variant | Time of anaerobic Incubation, hr | Growth index | % to the control |
|---|---|---|---|
| Control (without anoxia) | 0 | 4,63±9,50 | 100 |
| -SkQ1 | 48 | 0,60±0,09 | 13,0 |
| +10 nM SkQ1 | 48 | 2,4±0,10 | 52,0 |

**Table 20. Growth index of sugar cane callus of stable line after anaerobic incubation in glucosa-free medium**

| Variant | Time of anaerobic Incubation, hr | Growth index | % to the control |
|---|---|---|---|
| Control (without anoxia) | 0 | 12,8±0,93 | 100 |
| -SkQ1 | 168 | 0,90±0,05 | 7,0 |
| +10 nM SkQ1 | 168 | 3,0±0,17 | 23,0 |

## Claims

1. A composition for regenerating and stimulating growth of plants and for adapting plants to stress factors, comprising an effective amount of a compound of Formula I: 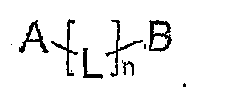 wherein A - effector group - antioxidant 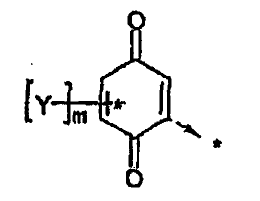 and/or its reduced form,
wherein m - integer of 1 to 3; Y - different or identical substituents representing lower alkyl or lower alkoxy; or two vicinal Y are so interrelated as to form a structure; 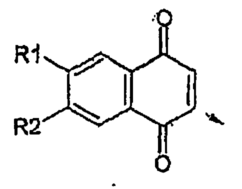 and/or its reduced form
wherein R1 and R2 are different or identical substituents being each independently lower alkyl or lower alkoxy; L - linker unit representing:
a) single or branched hydrocarbon chain, optionally substituted with one or more substituents and, in case of necessity, comprising one or more double or triple bonds;
b) natural isoprenoid chain;
n - integer of I to 20;
B - representing
a) Skoulachev - ion Sk:
Sk⁺Z⁻
wherein Sk - lipophilic cation; Z - pharmacologically acceptable anion;
b) charged hydrophobic peptide of 1-20 aminoacids
except for compounds in which A is ubiquinone (2-methyl-4,5-dimethoxy-3,6-dioxo-1,4-cyclohexadienyl) or tocopherol or the mimetic of a superoxidedismutase or ebselen besides that L - divalent decyl or divalent pentyl or divalent propyl and B - triphenylphosphomim; and also its solvates, isomers, agrochemically or physiologically acceptable salts and an agrochemically or physiologically acceptable carrier.

2. The composition of claim 1, wherein A is a residue of plastoquinone of the formula: 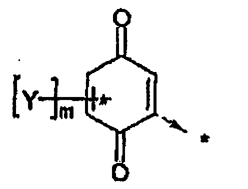 Y - methyl, m=2;
L - linker unit representing:
a) single or branched hydrocarbon chain, optionally substituted with one or more substituents and, in case of necessity, comprising one or more double or triple bond;
b) natural isoprenoid chain;
n - integer of 1 to 20;
B - representing
a) Skoulachev - ion Sk: Sk⁺ Z⁻
wherein Sk - lipophilic cation;
Z -acceptable anion;
b) charged hydrophobic peptide of 1-20 aminoacids
except for compounds in which A is ubiquinone (2-methyl-4,5-dimethoxy-3,6-dioxo-1,4-cyclohexadienyl) or tocopherol or the mimetic of a superoxidedismutase or ebselen, besides that L - divalent decyl or divalent pentyl or divalent propyl and B - triphenylphosphomim; and also its solvates, isomers, agrochemically or physiologically acceptable salts and an agrochemically or physiologically acceptable carrier.

3. The composition of claim 2, wherein s compound of Formula I is substance SkQ1:

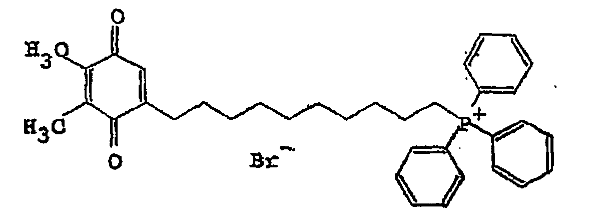

4. A method of stimulating the regeneration of plants from plant portions, plant tissue, plant cell cultures and undifferentiated plant cells cultivated in simulated conditions, which method comprises providing for a composition, as shown and described in any one of claims 1-3, and treating said plants, plant tissue and plant cell cultures with the composition of interest.

5. The method of claim 4, wherein the plant portion used is represented by seeds being treated with an effective amount of said composition to stimulate seed germination.

6. The method of claim 4, wherein the plant portion used is represented by seeds being treated with an effective amount of said composition to stimulate seed germination and to increase the germination of old, time-expired seeds.

7. The method of claim 4, wherein the plant portion used is represented by the cuttings, tendrils and other plant portions comprising meristems being treated with an effective amount of said composition for plant regeneration.

8. A method for preventing plants and portions thereof from fading and also said plant portions from falling off, comprising providing for a composition, as shown and described in any one of claims 1-3, and treating said plants, plant tissue and plant cell cultures with said composition.

9. The method of claim 8, with which flowers, plants and portions thereof or a plant material or culture are treated with an effective amount of said composition to prevent the flowers from fading and increasing the time of blossom of the plant.

10. The method of claim 8, in which flowers are sheared flowers and in which the sheared flowers, plants and portions thereof or a plant material or culture are treated with an effective amount of said composition to increase the time of stand of the sheared flowers.

11. The method of claim 8, in which plants and portions thereof or a plant material or culture are treated with an effective amount of said composition to prevent plant fruits from falling off.

12. A method of raising the resistance of plants to biotic and abiotic stresses, comprising providing for a composition, as shown and described in any one of claims 1-3, and treating said plants and portions thereof or a plant material or culture with said composition.

13. The method of claim 12, in which plants and portions thereof or a plant material or culture are treated with an effective amount of said composition to raise the resistance to toxyc chemicals.

14. The method of claim 12, in which plants and portions thereof or a plant material or culture are treated with an effective amount of said composition to raise the resistance to phytopathogens.

15. A method of suppressing the protective reactions of a plant, comprising providing for a composition, as shown and described in any one of claims 1-3, and treating said plants and portions thereof or a plant material and culture with said composition.

16. A method of raising the efficiency of plant transformation, comprising providing for a composition, as shown and described in any one of claims 1-3, and treating plants and portions thereof or a plant material and culture with said composition.

17. A method of increasing a biomass of plants and fruits, portions of the plants, plant cell cultures, particularly increasing the production of a certain substance, which method comprises providing for a composition, as shown and described in any one of claims 1-3, and treating said plants, fruits, portions of plants or a plant material and culture with said composition.

18. The method of claim 17, in which plants and portions thereof or a plant material or culture are treated with an effective amount of said composition to raise the stability of the production of recombinant proteins in the plants with the aid of transgenes, bacterial or viral vectors.

19. The method of claim 17, in which plants and portions thereof or a plant material or culture are treated with an effective amount of said composition to increase the production of organic compounds in the plants with the aid of transgenes, bacterial or viral vectors.
